Europäisches Patentamt

European Patent Office

Office européen des brevets

(11) Publication number: **0 249 465 B1**

# EUROPEAN PATENT SPECIFICATION

(45) Date of publication of patent specification: **08.01.92**  (51) Int. Cl.⁵: **G05D 13/62**

(21) Application number: **87305148.6**

(22) Date of filing: **10.06.87**

Divisional application 91 109323.5 filed on 10/06/87.

(54) **Motor rotation control apparatus.**

(30) Priority: **10.06.86 JP 134685/86**
**10.06.86 JP 134684/86**

(43) Date of publication of application:
**16.12.87 Bulletin 87/51**

(45) Publication of the grant of the patent:
**08.01.92 Bulletin 92/02**

(84) Designated Contracting States:
**DE FR GB NL**

(56) References cited:
**GB-A- 2 123 584**
**US-A- 4 197 489**
**US-A- 4 254 367**

(73) Proprietor: **SONY CORPORATION**
**7-35 Kitashinagawa 6-Chome Shinagawa-ku Tokyo 141(JP)**

(72) Inventor: **Machida, Yukihiko c/o Patent Division**
**Sony Corporation 6-7-35 Kitashinagawa Shinagawa-ku Tokyo 141(JP)**
Inventor: **Tomitaka, Tadafusa c/o Patent Division**
**Sony Corporation 6-7-35 Kitashinagawa Shinagawa-ku Tokyo 141(JP)**

(74) Representative: **Cotter, Ivan John et al**
**D. YOUNG & CO. 10 Staple Inn London WC1V 7RD(GB)**

## Description

This invention relates to apparatus for controlling rotation of a motor.

Motor speed servo control apparatuses have been employed for controlling the speed of rotation of motors used to drive video tape recorder (VTR) drums. It is current practice to perform such motor speed control based upon a motor speed signal having a series of pulses generated at a frequency corresponding to the motor speed as sensed by a frequency generator or like sensor operable in connection with the motor. One of several serious problems associated with this technique is reproduced picture distortion caused by noise superimposed on the motor speed signal when the drum or the frequency generator is mounted in an erroneous manner so as to cause drum rotation variances. Such noise superimposed on the motor speed signal has a frequency, of for example, 30 Hz, corresponding to the frequency of rotation of the drum.

In order to avoid the above-mentioned problem, it is current practice to design the motor speed servo control apparatus to have a characteristic such that the gain is reduced at a frequency of around 30 Hz. However, such gain reduction raises another problem in that the servo control accuracy is influenced considerably by torque variations.

Alternatively, it has been proposed to provide an analog notch filter to attenuate the gain at a frequency of around 30 Hz. However, this proposal is not suitable for applications to video tape recorders or the like in which the speed of rotation of the drum is changed to accommodate different modes of operation of the apparatus so that the frequency of the noise superimposed on the motor speed signal due to drum rotation variances changes from 30 Hz. Therefore, it is not appropriate to minimise reproduced picture distortion by employing a filter having a high quality factor or "Q" at a frequency of around 30 Hz.

According to a first aspect of the invention there is provided apparatus for controlling rotation of a motor, the apparatus comprising:

a sensor for sensing a condition of the motor rotation and for generating a motor rotation signal indicative of the sensed condition of the motor rotation;

a signal processor connected to the sensor for processing the motor rotation signal to provide an error signal indicative of an error between the sensed condition and a desired condition;

means connected to the signal processor for extracting an alternating current component from the error signal;

a comb filter circuit connected to be supplied with the alternating current component and operative to provide a filtered signal by filtering out a motor rotation component which may be superimposed on the motor rotation signal at a frequency of rotation of the motor and higher harmonics thereof;

an adder for adding the filtered signal from the comb filter circuit and the error signal from the signal processor to provide a control signal; and

driving means responsive to the control signal for driving the motor.

According to a second aspect of the invention there is provided apparatus for controlling rotation of a motor, the apparatus comprising:

a sensor sensitive to the motor's rotation speed and phase for generating speed and phase signals indicative of the sensed motor rotation speed and phase, respectively;

a first signal processor for processing the speed signal to provide a digital speed error signal comprising successive digital signal portions each having a predetermined number of bits and representing a speed error between the sensed motor rotation speed and a target motor rotation speed;

a second signal processor for processing the phase signal to provide a digital phase error signal comprising successive digital signal portions each having a predetermined number of bits and representing a phase error between the sensed motor rotation phase and a target motor rotation phase;

means connected to the first signal processor for extracting an alternating current component from the digital speed error signal;

a comb filter circuit for filtering out a motor rotation component which may be superimposed on the speed signal at a frequency of rotation of the motor and higher harmonics thereof from the alternating current component to provide a filtered signal;

an adder for adding the digital speed error signal from the first signal processor, the digital phase error signal from the second signal processor, and the filtered signal from the comb filter circuit to produce a digital output signal;

a digital-to-analog converter for converting the digital output signal of the adder into a corresponding analog control signal; and

drive means responsive to the control signal for driving the motor.

Preferred embodiments of the invention described hereinbelow provide a simple motor rotation servo control apparatus which can control motor rotation with high accuracy. The preferred embodiments employ a comb filter circuit to attenuate noise resulting from motor rotation variances. The preferred embodiments can employ inexpensive components to effect accurate motor rotation servo control so as to minimize wow and flutter.

Apparatus embodying the invention may (for example) be used in video tape recorders and the like for providing accurate servo control of motor rotation.

The invention will now be further described, by way of illustrative and non-limiting example, with reference to the accompanying drawings, in which like references identify like elements in the several figures, and in which:

Figure 1 is a schematic block diagram of a comb filter circuit which can be used in apparatus embodying the invention;

Figure 2 shows two waveforms used in explaining how speed error data is formed;

Figure 3 shows four waveforms obtained at different points in the comb filter circuit;

Figure 4 is a graph showing the gain versus frequency characteristic of the comb filter circuit;

Figure 5 is a schematic block diagram of a motor rotation control apparatus embodying the invention;

Figure 6 shows three waveforms used in explaining a manner in which phase error data is formed;

Figure 7 is a schematic block diagram of a motor rotation control apparatus;

Figure 8 is a diagram used in explaining how speed and phase error data are added before application to a digital-to-analog converter;

Figure 9 is a schematic block diagram of a modified form of data modification circuit;

Figure 10 is a schematic block diagram of another motor rotation control apparatus embodying the invention; and

Figure 11 is a schematic block diagram of a comb filter circuit that can be used in the apparatus of figure 10.

Before preferred embodiments of the invention are described, a description will first be given of a comb filter circuit can be used in motor rotation control apparatuses embodying the invention for removal of a direct current (DC) component and a 30Hz component and higher harmonics thereof from a signal inputted thereto.

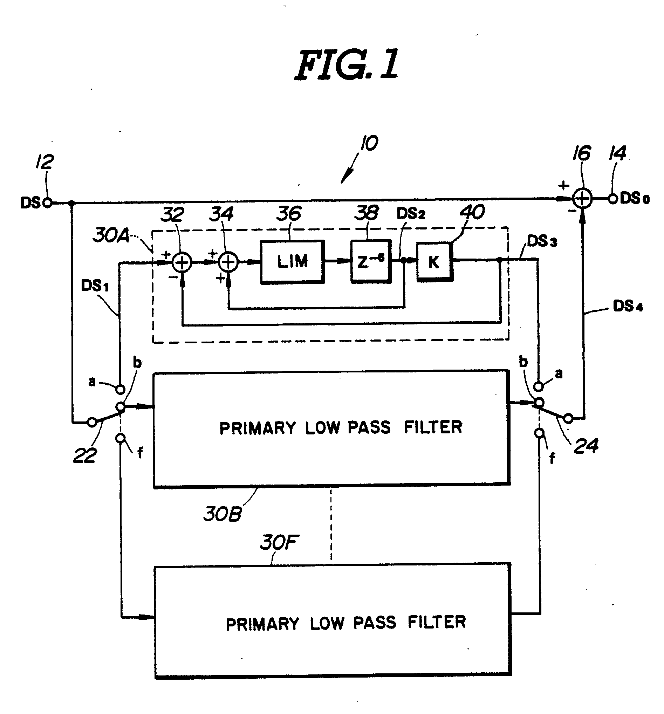

Figure 1 shows the comb filter circuit 10 to have an input terminal 12 and an output terminal 14. The input terminal 12 is connected to one input of an adder 16 which has an output connected to the output terminal 14. The input terminal 12 is also connected to a wiper of a six position switch 22 having six contacts 22a to 22f connected through respective digital primary low pass filters 30A to 30F to corresponding fixed contacts 24a to 24f of a six position switch 24 having a wiper connected to another input of the subtracter 16. Although, for purposes of clarity, only the contacts 22a, 22b, and 22f, the filters 30A, 30B, and 30F, and the contacts 24a, 24b, and 24f have been shown, it will be understood that the other elements, corresponding to those which are shown, are present.

The digital primary low pass filter 30A includes a subtractor 32 having an input connected to the fixed contact 22a. An output of the subtracter 32 is coupled to an integrator comprising an adder 34, a limiter 36 and a delay circuit 38. The adder 34 receives an input from the subtractor 32 and has an output connected through the limiter 36 to the delay circuit 38. An output of the delay circuit 38 is connected to another input of the adder 34 and also to a multiplier 40 having a multiplication factor K smaller than unity. An output of the multiplier 40 is coupled to the fixed contact 24a. The other digital primary low pass filters 30B ... 30F are of substantially the same structure as the primary low pass filter 30A.

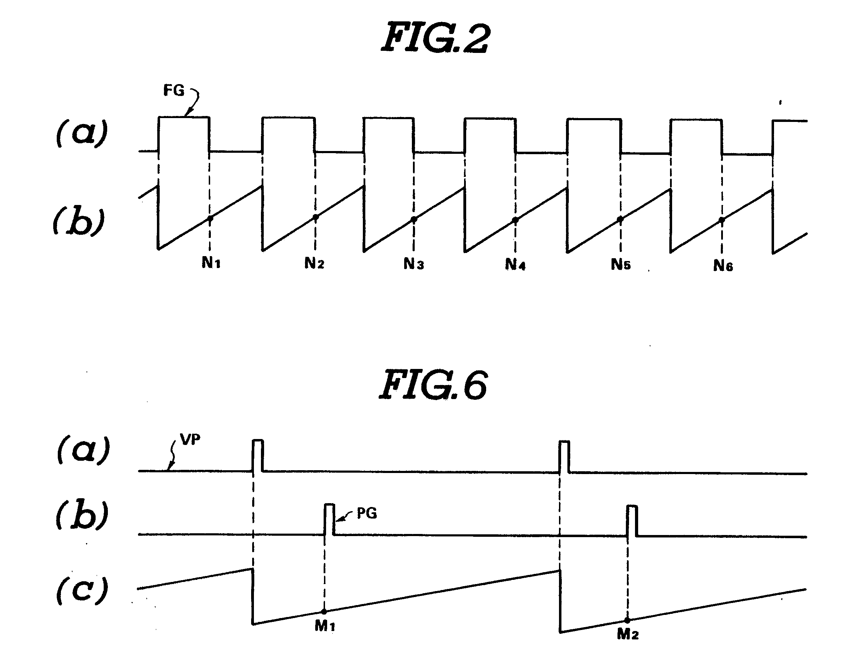

Referring to Figure 2, a waveform (a) represents a series of pulses FG generated at a frequency corresponding to a drum motor speed sensed by a sensor. The pulses FG are used to control a counter in such a manner that the counter is cleared and starts counting clock pulses at the leading edge of each of the pulses FG and its count is sampled at the trailing edge of each pulse FG, as shown by a waveform (b) in Figure 2. The sampled values N1, N2, N3 ... constitute speed error data DS which is used to rotate the motor at a constant speed. If, however, errors occur upon mounting the drum or the sensor, a 30 Hz component and its higher harmonics, which are multiples of the DC component and the 30 Hz component, may be superimposed on the speed error data DS, causing picture distortion. The filter circuit 10 can remove the 30 Hz component and higher harmonics thereof from the speed error data DS, in a manner which will now be described.

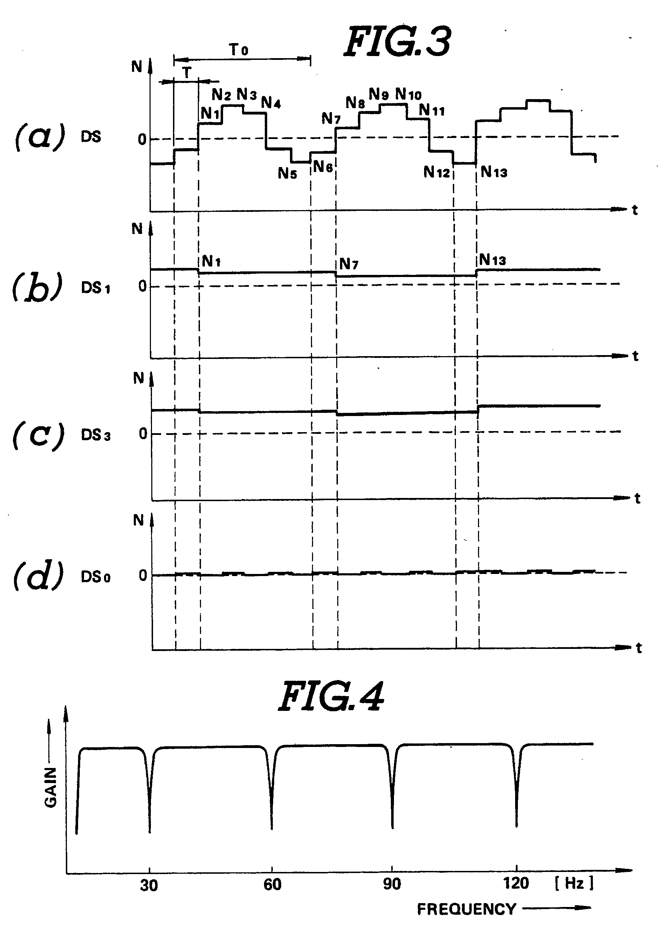

Assume that the comb filter circuit 10 receives, at its input terminal 12, speed error data DS including the sampled values N1, N2, N3 ..., as shown by a waveform (a) in Figure 3. The switches 22 and 24 receive the sampling signal from the counter and are thereby switched in synchronism with the times at which the counts N1, N2 ... of the counter are sampled in such a manner that the comb filter 30A can handle sampled counts N1, N7, N13 ..., the primary low pass filter 30B (not shown) can handle sampled counts N2, N8, N14 ..., the primary low pass filter 30C (not shown) can handle sampled counts N3, N9, N15, ..., the primary low pass filter 30D (not shown) can handle sampled counts N4, N10, N16, ..., the primary low pass filter 30E (not shown) can handle sampled counts N5, N11, N17, ..., and the primary low pass filter 30F can handle sampled counts N6, N12, N18, ... .

When each of the counts N1, N7, N13, ... is sampled, the switch 22 is set to connect the input terminal 12 to the primary low pass filter 30A and the switch 24 is set to connect the primary low pass filter 30A to the adder 16. As a result, speed error data DS1, as shown by a waveform (b) in Figure 3, is fed to the primary low pass filter 30A. The data DS1 is fed to the subtracter 32 and from there to the integrator comprising the adder 34, the limiter 36 and the delay circuit 38. The limiter 36 limits the dynamic range of the signal inputted thereto. The delay circuit 38 delays the signal inputted thereto for a time during which six counter counts are sampled; that is, for the time take for the drum motor to make a full rotation. The delay circuit 38 generates data DS2 which is fed back to the adder 34 where it is added to the next data fed thereto from the subtracter 32. For example, if the data DS2 corresponds to the sampled count N1, the adder 34 adds the data DS2 to the data corresponding to the count N7 sampled in the following sampling cycle. The data DS2 represent the average value of the data DS1. The data DS2 is fed to the multiplier 40 where the data DS2 is multiplied by the multiplication factor K smaller than unity to develop data DS3. The data DS3 represent an error of each of the sampled counts N1, N2, N3, ... from a centre value (zero level), as shown by a waveform (c) in Figure 3. The primary low pass filter 30A thus functions in a manner substantially equivalent to a resistive-capacitive (RC) low pass filter for analog signals. The data DS3 is fed back to the subtracter 32 which subtracts the data DS3 from the data DS1. The data DS3 is fed from the multiplier 40 to the subtracter 16 which subtracts the data DS3 from the data DS1.

In a similar manner, the switches 22 and 24 are set to operate the other primary low pass filters 30B to 30F successively. The result is that the subtracter 16 receives data DS4 which represents the 30 Hz component and its higher harmonics extracted from the data DS. The adder 16 subtracts the data DS4 from the original data DS to remove the 30 Hz component and its higher harmonics from the data DS. The resultant data DS0 developed at the output terminal 14 is shown by a waveform (d) in Figure 3.

Figure 4 shows the gain versus frequency characteristic of the comb filter circuit 10. It is to be noted that the frequencies of 30 Hz, 60 Hz and 90 Hz correspond to drum motor rotational frequencies selected in various respective modes of operation of a video tape recording playback apparatus in which the drum motor is incorporated. Therefore, the comb filter circuit 10 is effective to remove noise components superimposed on the speed error data due to nonuniform motor rotation at any selected motor speed.

Normally, the input data DS has a DC component which represents a reference value for motor speed. Since the DC component remains on the data DS4, the subtracter 16 removes the DC component when it subtracts the data DS4 from the data DS. This means that the comb filter circuit 10 cannot transmit a DC component. In order to transmit such a DC component, the comb filter circuit 10 would have to be provided with a very complex and expensive circuit which can calculate the average value of the outputs of the respective comb filters 30A to 30F or the average value of the input data DS and subtract the calculated average value from the data DS4.

Motor rotation control apparatus embodying the invention and described hereinbelow employs a simple circuit associated with such a filter circuit as is shown in Figure 1 to permit DC component transmission.

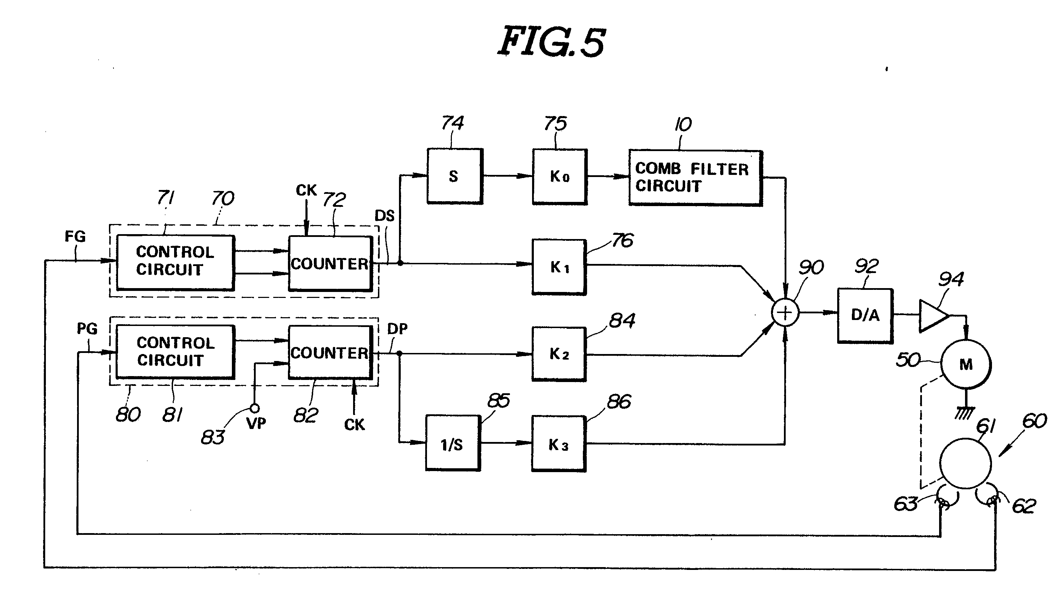

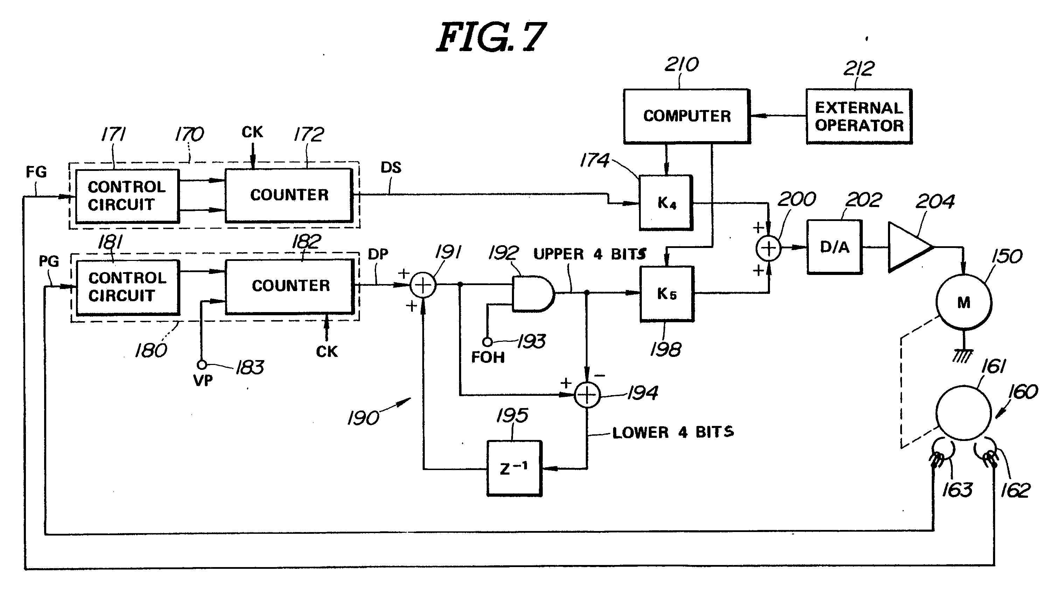

Figure 5 shows a motor rotation control apparatus embodying the invention. The apparatus includes speed-servo and phase-servo loops for controlling rotation of a drum motor 50 in a manner to rotate a drum (not shown) at a constant speed. The apparatus includes a motor rotation sensor 60 having a frequency generator or pulse generator 61 operable in connection with the drum motor 50 and first and second heads 62 and 63 disposed in close proximity to the circumference of the generator 61 for generating signals which indicate the speed and phase of rotation of the drum motor 50. The first head 62 develops a series of pulses FG at a frequency corresponding to the speed of the drum motor 50, as shown by the waveform (a) in Figure 2. The second head 63 develops a series of pulses PG each corresponding to 360 degrees of rotation of the drum motor 50, as shown by a waveform (b) in Figure 6. The pulses FG are fed from the first head 62 to a speed error data forming circuit 70 which forms a part of the speed servo loop. The pulses PG are fed from the second head 63 to a phase error data forming circuit 80 which forms a part of the phase servo loop.

The speed error data forming circuit 70 is shown in schematic form as including a control circuit 71 connected to control a counter 72. The control circuit 71 develops a reset/start (RSC) command signal at the leading edge of each of the pulses PG and a sample (SC) command signal at the trailing edge of each of the pulses FG. Upon occurrence of such a reset/start (RSC) command signal, the counter 72 clears its count and starts counting clock pulses CK generated at a predetermined frequency of, for example, 1 MHz. The sample (SC) command signal is applied to sample the count N of the counter 72. The speed error data forming circuit 70 produces speed error data DS which includes the count values N1, N2, N3, ... that are sampled in a sequential fashion, as shown in Figure 2(b).

An output of the speed error data forming circuit 70 is coupled to one input of an adder or adder circuit 90 through a series circuit of a differentiating circuit 74, a first multiplier circuit 75 and the filter circuit 10, and to another input of the adder 90 through a second multiplier circuit 76. The differentiating circuit 74 differentiates the speed error data DS to convert it into angular acceleration error data. It is to be noted that the DC component of the speed error data DS is removed while it is differentiated in the differentiating circuit 74 and the angular acceleration error data has an AC component only with no DC component. The first multiplier 75 has a predetermined first multiplication factor K0 and multiplies the angular acceleration error data by the first multiplication factor to provide a weighting for the data communicated therethrough. The multiplied angular acceleration error data is fed from the first multiplier circuit 75 to the filter circuit 10. The filter circuit 10 removes the 30 Hz component and higher harmonics thereof which may be superimposed on the received data, in the same manner as described above with reference to Figure 1. The second multiplier circuit 76 has a predetermined second multiplication factor K1 and multiplies the speed error data DS by the second multiplication factor K1 to provide a weighting for the data communicated therethrough. The loop including the second multiplier 76 is effective to communicate a DC component which represents a target or reference motor speed required to control the drum motor 50.

The phase error date forming circuit 80 is shown in schematic form as including a control circuit 81 connected to control a counter 82. The control circuit 81 develops a sample (SC) command signal at the leading edge of each of the PG pulses fed thereto from the second head 63. A vertical synchronisation signal VP, shown in Figure 6 (a), is applied at a terminal 83 to cause the counter 82 to clear its count and start counting clock pulses CK generated at a predetermined frequency of, for example, 1 MHz. The sample (SC) command signal is applied from the control circuit 81 to sample the count M of the counter 82. The phase error data forming circuit 80 produces phase error data DP which include count values M1, M2, ... that are sampled in a sequential fashion, as shown in Figure 6 (c).

An output of the phase error data forming circuit 80 is coupled to a further input of the adder 90 through a third multiplier circuit 84 and is connected to yet another input of the adder 90 through a series circuit of an integration circuit 85 and a fourth multiplier circuit 86. The third multiplier circuit 84 has a predetermined third multiplication factor K2 and multiplies the phase error data DP by the third multiplication factor K2 to provide a weighting for the date communicated therethrough. The integration circuit 85 integrates the phase error data DP. The fourth multiplier circuit 86 has a predetermined fourth multiplication factor K3 and multiplies the integrated data by the fourth multiplication factor K3 to increase the gain of the phase servo loop for low-frequency band components.

The adder 90 adds the data fed from the filter circuit 10 from and the second, third and fourth multiplier circuits 76, 84 and 86. The summed or added data is fed from the adder 90 to a digital-to-analog (D/A) converter 92 which converts it into a corresponding analog control signal. This control signal is applied to a drive amplifier circuit 94 which thereby controls the speed and phase of rotation of the drum motor 50.

In the illustrated embodiment, the first, second, third and fourth multiplication factors K0, K1, K2 and K3 are set in accordance with the relationship K0 > K1 > K2 > K3 in order that the motor rotation control apparatus has a faster response to a speed error than to a phase error.

In the illustrated embodiment, the speed error data DS is differentiated to have its DC component removed before the data is processed in the filter circuit 10 so that the filter circuit 10 can handle the AC component only. This permits the rotation control apparatus to remove only the component related to the actual variances of rotation of the drive motor 50. This effect is improved by the first multiplier circuit 75, which has the greatest multiplication factor K0. In addition, the DC component produced by a hold means in the counter 72, which represents a target or reference motor speed required to control the drum motor, is communicated through the second multiplier circuit 76 to the adder 90.

Although this embodiment has been described in connection with a digital servo circuit, it is to be noted that it is equally applicable to analog servo circuits, in which case the delay circuit 38 (Figure 1) may use a charge coupled device (CCD) element.

According to this embodiment, it is possible to remove errors introduced into motor rotation servo control due to motor rotation variances by a simple circuit arrangement. In addition, it is possible to handle superimposed noise and its higher harmonics by only using comb filters having a high quality factor or "Q". This is effective to avoid low-frequency band phase shift and to achieve stable and accurate motor rotation control.

Figure 7 shows a motor rotation control apparatus. The apparatus includes speed-servo and phase servo-loops for controlling rotation of a drum motor 150 in a manner to rotate a drum (not shown) at a constant speed. The apparatus includes a motor rotation sensor 160 which includes a frequency generator or pulse generator 161 operable in connection with the drum motor 150, and first and second heads 162 and 163 disposed in close proximity to the circumference of the generator 161 for generating signals which indicate the speed and phase of rotation of the drum motor 150. The first head 162 develops a series of pulses FG at a frequency corresponding to the speed of the drum motor 150, for example, three pulses for one rotation of the drum motor 150, as shown by the waveform (a) in Figure 2. The second head 163 develops a series of pulses PG each corresponding to 360 degrees of rotation of the drum motor 150, as shown by the waveform (b) in Figure 6. The pulses FG are fed from the first head 162 to a speed error data forming circuit 170 which forms a part of the speed servo loop. The pulses PG are fed from the second head 163 to a phase error data forming circuit 180 which forms a part of the phase servo loop.

The speed error forming circuit 170 is shown in schematic form as including a control circuit 171 connected to control a speed error counter 172. The control circuit 171 develops a reset/start (RSC) command signal at the leading edge of each of the pulses FG and a sample (SC) command signal at the trailing edge of each of the pulses FG. Upon occurrence of such a reset/start (RSC) command signal, the speed error counter 172 clears its count and starts counting clock pulses CK generated at a predetermined frequency of, for example, 1 MHz. The sample (SC) command signal is applied to sample the count N of the speed error counter 172. The speed error data forming circuit 170 produces speed error data DS which includes the count values N1, N2, N3 ... that are sampled in a sequential fashion, as shown in Figure 2(b).

An output of the speed error data forming circuit 170 is coupled to one input of an adder 200 through a first gain control circuit 174 which may be in the form of a multiplier circuit having a predetermined multiplication factor K4. The first gain control circuit 174 multiplies the speed error data DS by the multiplication factor K4 to provide a weighting for the data communicated therethrough.

The phase error data forming circuit 180 is shown in schematic form as including a control circuit 181 connected to control a phase error counter 182. The control circuit 181 develops a sample (SC) command signal at the leading edge of each of the pulses PG fed thereto form the second head 163. A vertical synchronisation signal VP is applied at a terminal 183 to cause the phase error counter 182 to clear its count and start counting clock pulses CK generated at a predetermined frequency of, for example, 1 MHz. The sample (SC) command signal is applied from the control circuit 181 to sample the count M of the phase error counter 182. The phase error data forming circuit 180 produces phase error data DP which includes the count values M1, M2, ... that are sampled in a sequential fashion, as shown in Figure 6 (c).

An output of the phase error data forming circuit 180 is coupled through a data modification circuit 190 to a second gain control circuit 198 and from there to another input of the adder 200. The second gain control circuit 198 may be in the form of a multiplier circuit having a predetermined multiplication factor K5 to provide a weighting for the data communicated therethrough. A computer 210 can change the gains K4 and K5 based upon data inputted thereto from an external operator 212.

The data modification circuit 190 includes an adder 191 having an input from the phase error data forming circuit 180. The adder 191 has an output connected to one input of an AND gate 192 having another input connected to a terminal 193 to which a signal having a code FOH represented as "11110000" is applied. The output of the adder 191 is also connected to one input of a subtracter 194 which has another input connected to the output of the AND gate 192. The output of the subtracter 194 is connected through a delay circuit 195 to another input of the adder 191. The output of the AND gate 192 is connected to the second gain control circuit 198.

The adder 200 adds the data fed thereto from the first and second gain control circuits 174 and 198. The summed or added data is fed from the adder 200 to a digital-to-analog (D/A) converter 202 which converts it into a corresponding analog control signal. This control signal is applied to a drive amplifier circuit 204 which thereby controls the speed and phase of the drum motor 150.

The operation of the data modification circuit 190 will now be described. First of all, for purposes of this explanation, assume that the output of the phase error data forming circuit 180 is connected directly to the second gain control circuit 198 with the data modification circuit 190 being removed. The first gain control circuit 174 multiplies the speed error data DS by the multiplication factor K4 and produces data represented as K4 x DS. The second gain control circuit 198 multiplies the phase error data DP by the multiplication factor K5 and produces data represented as K5 x KP. The adder 200 adds the data K4 X DS and the data K5 X DP. Assuming now that both the speed error data DS and the phase error data DP are 8-bit data and that the multiplication factor K4 is set at about 1 and the multiplication factor K5 is set at $2^{-4}$, the data outputted from the adder 200 is represented as:

$$K4 \times DS + K5 \times DP = DS + 2^{-4} \times DP$$

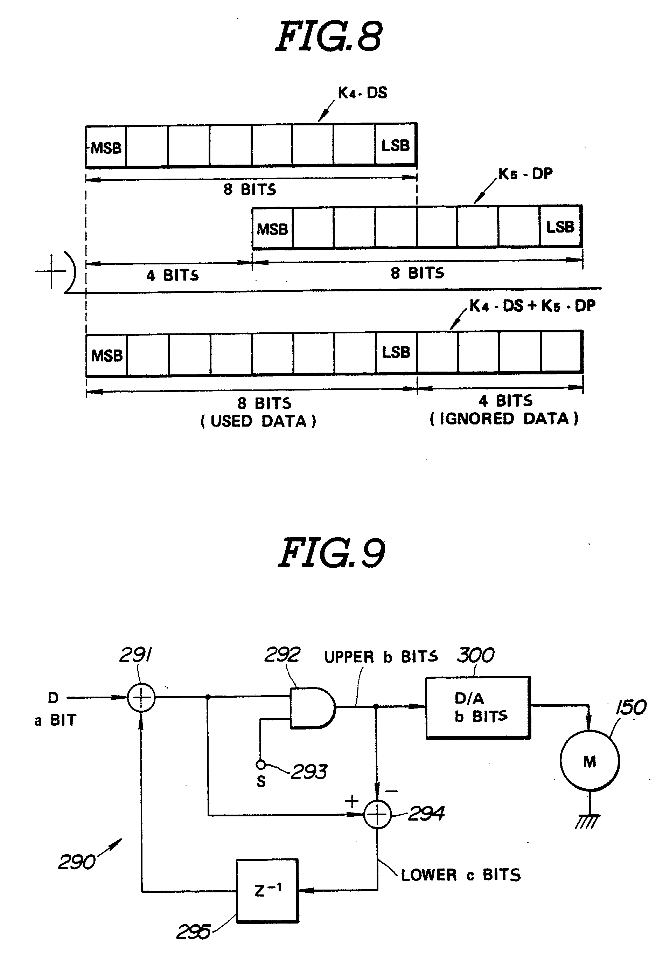

As shown in Figure 8, in which the abbreviations "MSB" and "LSB" represent "most significant bit" and "least significant bit", respectively, the data $2^{-4} \times DP$ is equivalent to the phase error data DP shifted by four bits towards the lower bit side and, thus, the added data $DS/2^{-4} \times DP$ is 12-bit data. The added data is fed to the D/A converter 202. It is preferable that the D/A converter 202 is an 8-bit converter in view of cost considerations. Such an 8-bit D/A converter converts the upper eight bits of digital data into analog form while omitting the other lower four bits of data. However, this manner of operation introduces noise into the control signal so as to degrade the motor rotation control accuracy, increase wow and flutter, and exert adverse influences on the signal, particularly in its low frequency band. Although it may be possible to overcome the problem by employing a 13-bit D/A converter, such a converter is too costly to be used in such an apparatus.

The data modification circuit 190 provides an elegant solution to the above problems. The AND gate 192 is open to communicate the data from the adder 191 to the second gain control circuit 198 when it receives a logic 1 level signal at its other input to which the FOH code signal "11110000" is applied. Therefore, the AND gate 192 communicates the upper four bits of data of the 8-bit phase error data DP to the second gain control circuit 198 and also to the subtracter 194, which subtracts the upper four bits of data from the 8-bit phase error data DP fed thereto from the adder 191. As a result, the subtracter 194 develops a signal representing the lower four bits of data. The lower four bits of data are fed to the delay circuit 195, which provides a predetermined time delay relative to the signal applied thereto from the subtracter 194, the predetermined time delay corresponding to one sampling interval at which the count values M1, M2, ... are sampled, as shown in Figure 6(c). The delay circuit 195 may employ a memory, an eight-bit shift register, or the like capable of delaying the lower four bits of data for a time corresponding to the time interval at which the count values M1, M2, ... are sampled, as shown in Figure 6(c). The adder 191 adds the lower four bits of data of the previously sampled phase error data DP to the lower four bits of data of the presently sampled phase error data DP in such a manner that 1 is added to the digit at the fourth bit position from the most significant bit (MSB) of the phase error data DP. The added data is fed through the subtracter 194 and the delay circuit 195 to the adder 191 again. This operation is repeated so that the adder 191 accumulates the lower four bits of data.

When the lower four bits of data are accumulated, 1 is added to the digit at the fourth bit position from the most significant bit (MSB) of the phase error data DP; that is, at the lowermost bit position of the upper four bits of data obtained from the AND gate 192. The upper four bits of data are fed to the second gain control circuit 198.

Figure 9 shows a modified form of the data modification circuit that can be applied to more general purposes. This modification is effective to compensate for the lower bits of data of a-bit error data inputted to the data modification circuit, the upper bits of data being fed to a D/A converter 300 having a processing capacity equal to an effective number b of bits smaller than the number a of bits of the error data.

In Figure 9, the data modification circuit, designated by the numeral 290, includes an adder 291 having an input to which a-bit data D is fed. The adder 291 has an output connected to one input of an AND gate 292 having another input connected to a terminal 293 to which a signal S having a code is applied for extracting the upper bits (b bits) of data from the inputted abit data D. The output of the adder 291 is also connected to one input of a subtracter 294 which has another input connected to an output of the AND gate 292. An output of the subtracter 294 is connected through a delay circuit 295 to another input of the adder 291. The output of the AND gate 292 is connected to the D/A converter 300 which converts a b-bit digital signal into a corresponding analog signal which is used to control a motor 150.

The AND gate 292 is open to communicate the data from the adder 291 to the D/A converter 300 when it receives a logic 1 level signal at the other input 203 to which the code signal S is applied. Therefore, the AND gate 292 communicates the upper b bits of data of the a-bit data D to the D/A converter 300 and also to the subtracter 294 which subtracts the upper b bits of data from the a-bit data D fed thereto from the adder 291. As a result, the subtracter 294 develops a signal representing the lower c (a-b) bits of data. The lower c bits of data are fed to the delay circuit 295, which provides a predetermined time delay relative to the signal applied thereto from the subtracter 294, the predetermined time delay corresponding to one sampling interval at which the data D is formed. The delay circuit 295 may employ a memory, a shift register, or the like capable of delaying the lower c bits of data by a time corresponding to the one sampling interval. The adder 291 adds the lower c bits of data of the previously sampled data D to the lower c bits of data of the presently sampled data D in a similar manner to that described with reference to Figure 7. The added data is fed through the subtracter 294 and the delay circuit 295 and applied to the adder 291 again.

This operation is repeated so that the adder 291 accumulates the lower c bits of data. When the lower c bits of data are accumulated, 1 is added to the digit at the lowermost bit position of the upper b bits of data. The upper b bits of data are fed to the D/A/ converter 300 where they are converted into digital form for controlling the motor 150. It is, therefore, apparent that the apparatus is effective to improve the motor rotation control accuracy.

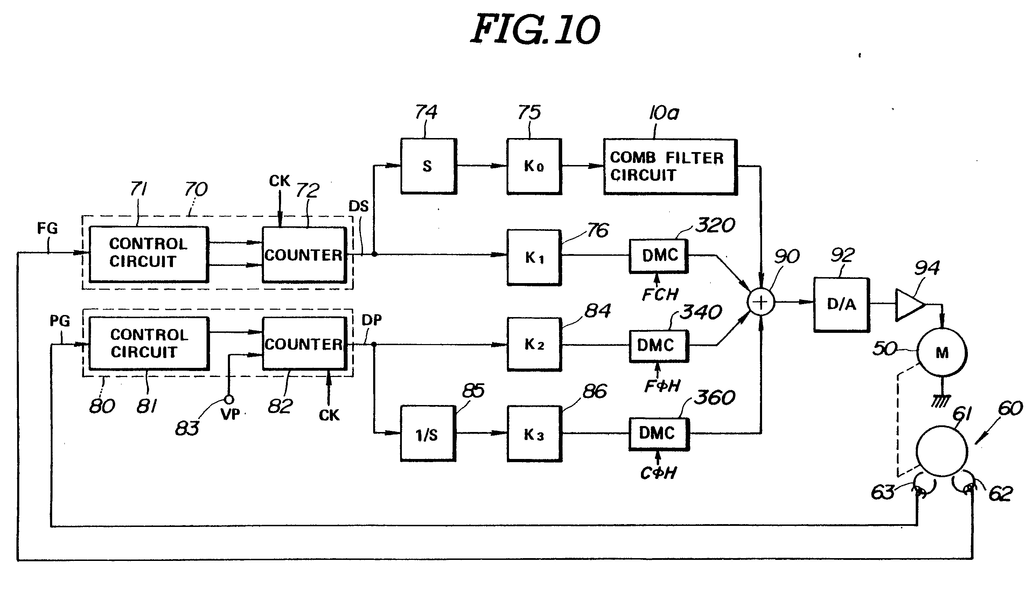

Figure 10 shows another servo control apparatus embodying the invention which is substantially the same as the embodiment shown in and described with reference to Figure 5, except for the provision of a data modulation circuit in each of the circuits to the adder 90 and except for the comb filter circuit (referenced 10a in Figure 10) being of a different construction. Accordingly, parts in Figure 10 which are like parts in Figure 5 are designated by like references.

In this embodiment, in data modulation circuit 320 is provided in line between the second multiplier circuit 76 and the adder 90. The data modulation circuit 320 is substantially the same as the data modulation circuit 290 shown in and described with reference to Figure 9 except for the code signal applied to the other input 293 of the AND gate 292. The code signal FCH, which is dependent on the multiplication factor K1, is selected in a manner permitting the D/A converter 92 to convert the input digital data into analog form without omitting any part of the digital data, as described with reference to Figures 7 and 9. For example, the code signal FCH may be "11111100" if the multiplication factor K1 is $2^{-2}$. A data modulation circuit 340 is provided in a line between the second multiplier circuit 84 and the adder 90. The data modulation circuit 340 is substantially the same as the data modulation circuit 290 shown in and described with reference to Figure 9 except for the code signal applied to the other input 293 of the AND gate 292. The code signal FØH, which is dependent on the multiplication factor K2, is selected in a manner permitting the D/A converter 92 to convert the input digital data into analog form without omitting any part of the digital data, as described with reference to Figures 7 and 9. For example, the code signal FØH may be "11110000" if the multiplication factor K2 is $2^{-4}$. A data modulation circuit 360 is provided in a line between the second multiplier circuit 86 and the adder 90. The data modulation circuit 360 is substantially the same as the data modulation circuit 290 shown in and described with reference to Figure 9 except for the code signal applied to the other input 293 of the AND gate 292. The code signal CØH, which is dependent on the multiplication factor K3, is selected in a manner permitting the D/A converter 92 to convert the input digital data into analog form without omitting any part of the digital data, as described with reference to Figures 7 and 9. For example, the code signal FØH may be "11000000" if the multiplication factor K3 is $2^{-6}$.

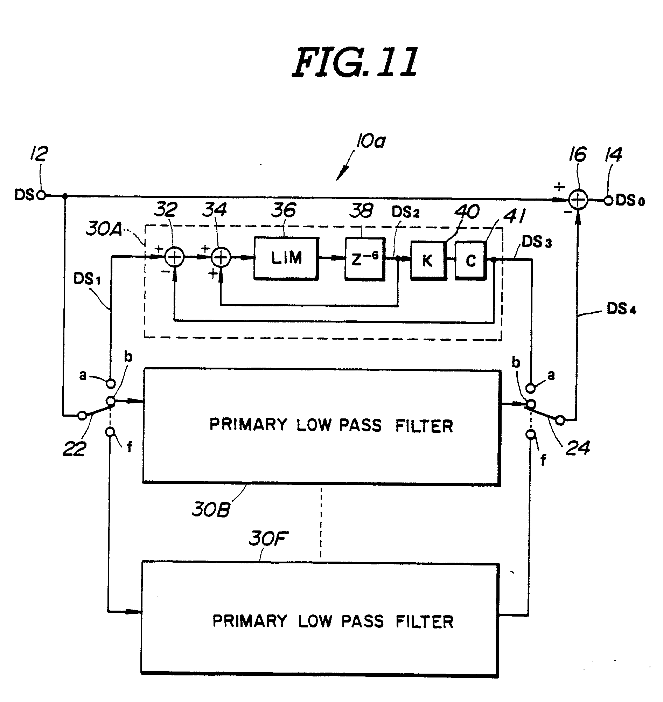

The comb filter circuit 10a is shown in detail in Figure 11. The comb filter circuit 10a is substantially the same as the comb filter circuit 10 described with reference to Figure 1 except for a data modification circuit 41 which is connected at the output of the multiplier 40. The data modification circuit 41 is substantially the same as the data modulation circuit 290 shown in and described with reference to Figure 9 except for the code signal applied to the other input 293 of the AND gate 292. The code signal, which is dependent on the multiplication factor K, is selected in a manner permitting the D/A converter 92 to convert the input digital data into analog form without omitting any part of the digital data, as described with reference to Figures 7 and 9.

## Claims

1. Apparatus for controlling rotation of a motor, the apparatus comprising:

   a sensor (60) for sensing a condition of the motor rotation and for generating a motor rotation signal (FG) indicative of the sensed condition of the motor rotation;

   a signal processor (70) connected to the sensor (60) for processing the motor rotation signal (FG) to provide an error signal (DS) indicative of an error between the sensed condition and a desired condition;

   means (74) connected to the signal processor (70) for extracting an alternating current component from the error signal (DS);

   a comb filter circuit (10; 10a) connected to be supplied with the alternating current component and operative to provide a filtered signal (DS0) by filtering out a motor rotation component which may be superimposed on the motor rotation signal (FG) at a frequency of rotation of the motor and higher harmonics thereof;

   an adder (90) for adding the filtered signal (DS0) from the comb filter circuit (10; 10a) and the error signal (DS) from the signal processor (70) to provide a control signal; and

   driving means (94) responsive to the control signal for driving the motor (50).

2. Apparatus according to claim 1, which includes a first circuit (75) for multiplying the alternating current component, before it is supplied to the comb filter circuit (10; 10a), by a predetermined first value (K0), and a second circuit (76) for multiplying the error signal (DS), before it is supplied to the adder (90), by a predetermined second value (K1) which is less than the first value (K0).

3. Apparatus according to claim 1 or claim 2, wherein the comb filter circuit (10; 10a) includes an input terminal (12) connected to the alternating current component extracting means (74), an output terminal (14) connected to the adder (90), a plurality of primary low pass filters (30A to 30F), and switching means (22, 24) for connecting different ones of the primary low pass filters (30A to 30F) between the input and output terminals (12, 14) in a predetermined sequence at a predetermined number of degrees of rotation of the motor.

4. Apparatus for controlling rotation of a motor, the apparatus comprising:

a sensor (60) sensitive to the motor's rotation speed and phase for generating speed and phase signals (FG, PG) indicative of the sensed motor rotation speed and phase, respectively;

a first signal processor (70) for processing the speed signal (FG) to provide a digital speed error signal (DS) comprising successive digital signal portions (N1, N2 etc.) each having a predetermined number of bits and representing a speed error between the sensed motor rotation speed and a target motor rotation speed;

a second signal processor (80) for processing the phase signal (PG) to provide a digital phase error signal (DP) comprising successive digital signal portions (M1, M2 etc.) each having a predetermined number of bits and representing a phase error between the sensed motor rotation phase and a target motor rotation phase;

means (74) connected to the first signal processor (70) for extracting an alternating current component from the digital speed error signal (DS);

a comb filter circuit (10; 10a) for filtering out a motor rotation component which may be superimposed on the speed signal (FG) at a frequency of rotation of the motor and higher harmonics thereof from the alternating current component to provide a filtered signal (DS0);

an adder (90) for adding the digital speed error signal (DS) from the first signal processor (70), the digital phase error signal (DP) from the second signal processor, and the filtered signal (DS0) from the bomb filter circuit (10; 10a) to produce a digital output signal;

a digital-to-analog converter (92) for converting the digital output signal of the adder (90) into a corresponding analog control signal;

and

drive means (94) responsive to the control signal for driving the motor (50).

5. Apparatus according to claim 4, which includes a first gain control means (75) for multiplying the alternating current component, before it is supplied to the comb filter circuit, by a first value (K0), a second gain control means (76) for multiplying the digital speed error signal (DS), before it is supplied to the adder (90), by a second value (K1) which is smaller than the first value (K0), and a third gain control means (84) for multiplying the digital phase error signal (DP), before it is supplied to the adder (90), by a third value (K2) which is smaller than the second value (K1).

6. Apparatus according to claim 4 or claim 5, wherein the comb filter circuit (10; 10a) includes an input terminal (12) connected to the alternating current component extracting means (74), an output terminal (14) connected to the adder (90), a plurality of primary low pass filters (30A to 30F), and switching means (22, 24) for connecting different ones of the primary low pass filters (30A to 30F) between the input and output terminals (12, 14) in a predetermined sequence at a predetermined number of degrees of rotation of the motor.

7. Apparatus according to claim 4, claim 5 or claim 6, which includes a first data modification circuit (320) for dividing each of the successive digital speed error signal portions into a first digital signal portion having upper bits of data and a second digital signal portion having the remaining lower bits of data, the first data modification circuit (320) including means for adding the second digital signal portion to the next one of the successive digital speed error signal portions, and a second data modulation circuit (340) for dividing each of the successive digital phase error signal portions into a third digital signal portion having upper bits of data and a fourth digital signal portion having the remaining lower bits of data, the second data modification circuit (340) including means for adding the fourth digital signal portion to the next one of the successive digital phase error signal portions.

**Revendications**

1. Dispositif pour commander la rotation d'un moteur, le dispositif comprenant :

un capteur (60) pour capter une condition de la rotation du moteur et pour générer un signal de rotation de moteur (FG) indicatif de la condition captée de la rotation du moteur ;

un processeur de signal (70) connecté au capteur (60) pour traiter le signal de rotation de moteur (FG) afin de fournir un signal d'erreur (DS) indicatif d'une erreur entre la condition captée et une condition souhaitée ;

un moyen (74) connecté au processeur de signal (70) pour extraire une composante de courant alternatif du signal d'erreur (DS) ;

un circuit de filtre-peigne (10 ; 10a) connecté de façon à recevoir la composante de courant alternatif et fonctionnant pour fournir un signal filtré (DS0) en éliminant par filtrage une composante de rotation de moteur qui peut être superposée au signal de rotation de moteur (FG) à une fréquence de rotation du moteur et à des harmoniques plus élevées de celle-ci ;

un additionneur (90) pour additionner le signal filtré (DS0) qui provient du circuit de filtre-peigne (10 ; 10a) et le signal d'erreur (DS) qui provient du processeur de signal (70) pour fournir un signal de commande ; et

un moyen d'entraînement (94) sensible au signal de commande pour entraîner le moteur (50).

2. Dispositif selon la revendication 1, qui inclut un premier circuit (75) pour multiplier la composante de courant alternatif, avant qu'elle ne soit acheminée au circuit de filtre-peigne (10 ; 10a), par une première valeur prédéterminée (K0), et un second circuit (76) pour multiplier le signal d'erreur (DS), avant qu'il ne soit acheminé à l'additionneur (90), par une seconde valeur prédéterminée (K1) qui est inférieure à la première valeur (K0).

3. Dispositif selon la revendication 1 ou 2, dans lequel le circuit de filtre-peigne (10 ; 10a) inclut une borne d'entrée (12) qui est connectée au moyen d'extraction de composante de courant alternatif (74), une borne de sortie (14) qui est connectée à l'additionneur (90), une pluralité de filtres passe-bas primaires (30A à 30F) et un moyen de commutation (22, 24) pour connecter certains filtres différents pris parmi les filtres passe-bas primaires (30A à 30F) entre les bornes d'entrée et de sortie (12, 14) selon une séquence prédéterminée pour un nombre prédéterminé de degrés de rotation du moteur.

4. Dispositif pour commander la rotation d'un moteur, le dispositif comprenant :

un capteur (60) sensible à la vitesse et à la phase de la rotation du moteur pour générer des signaux de vitesse et de phase (FG, PG) qui indiquent respectivement la vitesse de rotation de moteur et la phase captées ;

un premier processeur de signal (70) pour traiter le signal de vitesse (FG) afin de fournir un signal d'erreur de vitesse numérique (DS) comprenant des parties de signal numérique successives (N1, N2, etc...), chacune ayant un nombre prédéterminé de bits et représentant une erreur de vitesse entre la vitesse de rotation de moteur captée et une vitesse de rotation de moteur cible ;

un second processeur de signal (80) pour traiter le signal de phase (PG) afin de fournir un signal d'erreur de phase numérique (DP) comprenant des parties de signal numérique successives (M1, M2, etc...), chacune ayant un nombre prédéterminé de bits et représentant une erreur de phase entre la phase de rotation de moteur captée et une phase de rotation de moteur cible ;

un moyen (74) connecté au premier processeur de signal (70) pour extraire une composante de courant alternatif du signal d'erreur de vitesse numérique (DS) ;

un circuit de filtre-peigne (10 ; 10a) pour éliminer par filtrage une composante de rotation de moteur qui peut être superposée au signal de vitesse (FG) à une certaine fréquence de rotation du moteur et à des harmoniques plus élevées de celle-ci à partir de la composante de courant alternatif afin de fournir un signal filtré (DS0) ;

un additionneur (90) pour additionner le signal d'erreur de vitesse numérique (DS) qui provient du premier processeur de signal (70), le signal d'erreur de phase numérique (DP) qui provient du second processeur de signal et le signal filtré (DS0) qui provient du circuit de filtre-peigne (10 : 10a) afin de produire un signal de sortie numérique ;

un convertisseur numérique/analogique (92) pour convertir le signal de sortie numérique de l'additionneur (90) en un signal de commande analogique correspondant ; et

un moyen d'entraînement (94) sensible au signal de commande pour entraîner le moteur (50).

5. Dispositif selon le revendication 4, qui inclut un premier moyen de commande de gain (75) pour multiplier la composante de courant alternatif avant qu'elle ne soit acheminée au circuit de filtre-peigne, par une première valeur (K0), un second moyen de commande de gain (76) pour multiplier le signal d'erreur de vitesse numérique (DS) avant qu'il ne soit acheminé à l'additionneur (90), par une seconde valeur (K1) qui est inférieure à la première valeur (K0), et un troisième moyen de commande de gain (84) pour multiplier le signal d'erreur de phase numérique (DP) avant qu'il ne soit acheminé à l'additionneur (90) par une troisième valeur (K2) qui est inférieure à la seconde valeur (K1).

6. Dispositif selon la revendication 4 ou 5, dans lequel le circuit de filtre-peigne (10 ; 10a) inclut une borne d'entrée (12) qui est connectée au moyen d'extraction de composante de courant alternatif (74), une borne de sortie (14) qui est connectée à l'additionneur (90), une pluralité de filtres passe-bas primaires (30A à 30F) et un moyen de commutation (22, 24) pour connecter certains filtres différents pris parmi les filtres passe-bas primaires (30A à 30F) entre les bornes d'entrée et de sortie (12, 14) selon une séquence prédéterminée pour un nombre prédéterminé de degrés de rotation du moteur.

7. Dispositif selon la revendication 4, 5 ou 6, qui inclut un premier circuit de modification de données (320) pour diviser chacune des parties successives de signal d'erreur de vitesse numérique en une première partie de signal numérique qui a des bits supérieurs de données et en une seconde partie de signal numérique qui a les bits inférieurs restants de données, le premier circuit de modification de données (320) incluant un moyen pour additionner la seconde partie de signal numérique à la suivante des parties successives de signal d'erreur de vitesse numérique, et un second circuit de modulation de données (340) pour diviser chacune des parties successives de signal d'erreur de phase numérique en une troisième partie de signal numérique qui a des bits supérieurs de données et en une quatrième partie de signal numérique qui a les bits inférieurs restants de données, le second circuit de modification de données (340) incluant un moyen pour additionner la quatrième partie de signal numérique à la suivante des parties successives de signal d'erreur de phase numérique.

**Patentansprüche**

1. Vorrichtung zur Steuerung der Rotation eines Motors, bestehend aus

einem Sensor (60) zur Ermittlung eines Umdrehungszustands des Motors und zur Erzeugung eines Motordrehungssignals (FG), das für den ermittelten Umdrehungszustand des Motors kennzeichnend ist,

einem mit dem Sensor (60) verbundenen Signalprozessor (70) zur Verarbeitung des Motordrehungssignals (FG) und zur Lieferung eines Fehlersignals (DS), das für die Abweichung zwischen dem ermittelten Zustand und einem gewünschten Zustand kennzeichnend ist,

einer mit dem Signalprozessor (70) verbundenen Einrichtung (74) zur Extrahierung einer Wechselstromkomponente aus dem Fehlersignal (DS),

einer mit der Wechselstromkomponente beaufschlagbaren Kammfilterschaltung (10; 10a), die ein gefiltertes Signal (DS0) liefert, aus dem eine dem Motordrehungssignal (FG) gegebenenfalls überlagerte Motordrehungskomponente mit der Frequenz der Motordrehung und höheren Harmonischen derselben ausgefiltert sind,

einem Addierer (90) zum Addieren des aus der Kammfilterschaltung (10; 10a) kommenden gefilterten Signale (DS0) und des aus dem Signalprozessor (70) kommenden Fehlersignals (DS) zur Lieferung eines Steuersignals und

einer auf des Steuersignal ansprechenden Treibereinrichtung (94) für den Motor (50).

2. Vorrichtung nach Anspruch 1 mit einer ersten Schaltung (75) zum Multiplizieren der Wechselstromkomponente mit einem ersten vorbestimmten Wert (K0), bevor sie der Kammfilterschaltung (10; 10a) zugeführt wird, und einer zweiten Schaltung (76) zum Multiplizieren des Fehlersignals (DS) mit einem zweiten vorbestimmten Wert (K1), der kleiner ist als der erste Wert, bevor es dem Addierer (90) zugeführt wird.

3. Vorrichtung nach Anspruch 1 oder 2, bei der die Kammfilterschaltung (10; 10a) einen mit der Einrichtung (74) zum Extrahieren der Wechselstromkomponente verbundenen Eingang (12), einen mit dem Addierer (90) verbundenen Ausgang (14), mehrere primäre Tiefpaßfilter (30A bis 30F) sowie Schaltmittel (22, 24) aufweist, mit denen unterschiedliche Exemplare der primären Tiefpaßfilter (20A bis 30F) bei vorbestimmten Gradzahlen der Motordrehung in einer vorbestimmten Folge zwischen den Eingang (12) und den Ausgang (14) schaltbar sind.

4. Vorrichtung zur Steuerung der Rotation eines Motors, bestehend aus

einem auf die Motorumdrehungsgeschwindigkeit und -phase ansprechenden Sensor (60) zur Erzeugung von Geschwindigkeits- und -phasensignalen (FG, PG), die für die erfaßte Motorumdrehungsgeschwindigkeit bzw. -phase kennzeichnend ist,

einem ersten Signalprozessor (70) zur Verarbeitung des Geschwindigkeitssignals (FG) und zur Erzeugung eines digitalen Geschwindigkeitsfehlersignals (DS), das aufeinanderfolgende digitale Signalanteile (N1, N2 usw.) mit jeweils einer vorbestimmte Anzahl von Bits umfaßt, die eine Geschwindigkeitsabweichung zwischen der erfaßten Motorumdrehungsgeschwindigkeit und einem Zielwert der Motorumdrehungsgeschwindigkeit repräsentieren,

einem zweiten Signalprozessor (80) zur Verarbeitung des Phasensignals (PG) und zur Erzeugung eines digitalen Phasenfehlersignals (DP), das aufeinanderfolgende digitale Signalanteile (M1, M2 usw.) mit jeweils einer vorbestimmten Anzahl von Bits umfaßt, die eine Phasenabweichung zwischen der erfaßten Motorumdrehungsphase und einem Zielwert der Motorumdrehungsphase repräsentieren,

einer mit dem ersten Signalprozessor (70) verbundenen Einrichtung (74) zur Extrahierung einer Wechselstromkomponente aus dem digitalen Phasenfehlersignal (DS),

einer Kammfilterschaltung (10; 10a) zum Ausfiltern einer dem Geschwindigkeitssignal (FG) gegebenenfalls überlagerten Motorumdrehungskomponente mit einer der Motorumdrehung entsprechenden Frequenz und höheren Harmonischen derselben aus der Wechselstromkomponente und zur Lieferung eines gefilterten Signals (DS0),

einem Addierer (90) zum Addieren des aus dem ersten Signalprozessor (70) kommenden digitalen Geschwindigkeitsfehlersignals (DS), des aus dem zweiten Signalprozessor kommenden digitalen Phasenfehlersignals (DP) und des aus der Kammfilterschaltung (10; 10a) kommenden gefilterten Signals (DS0) zur Erzeugung gung eines digitalen Ausgangssignals,

einem Digital/Analogwandler (92) zur Umwandlung des digitalen Ausgangssignals des Addierers (90) in ein entsprechendes analoges Steuersignal, und

einer auf das Steuersignal ansprechenden Treibereinrichtung (94) für den Motor (50).

5. Vorrichtung nach Anspruch 4 mit einer ersten Verstärkungsfaktor-Steuereinrichtung (75) zum Multiplizieren der Wechselstromkomponente mit einem ersten Wert (K0), bevor sie der Kammfilterschaltung zugeführt wird, ferner mit einer zweiten Verstärkungsfaktor-Steuereinrichtung (76) zum Multiplizieren des digitalen Geschwindigkeitsfehlersignals (DS) mit einem zweiten Wert (K1), der kleiner ist als der erste Wert (K0), bevor es (DS) dem Addierer (90) zugeführt wird, sowie mit einer dritten Verstärkungsfaktor-Steuereinrichtung (84) zum Multiplizieren des digitalen Phasenfehlersignals (DP) mit einem dritten Wert (K2), der kleiner ist als der zweite Wert (K1), bevor es (DP) dem Addierer (90) zugeführt wird.

6. Vorrichtung nach Anspruch 4 oder 5, bei der die Kammfilterschaltung (10; 10a) einen mit der Einrichtung (74) zum Extrahieren der Wechselstromkomponente verbundenen Eingang (12), einen mit dem Addierer (90) verbundenen Ausgang (14), mehrere primäre Tiefpeßfilter (30A bis 30F) sowie Schaltmittel (22, 24) aufweist, mit denen unterschiedliche Exemplare der primären Tiefpaßfilter (20A bis 30F) bei vorbestimmten Gradzahlen der Motordrehung in einer vorbestimmten Folge zwischen den Eingang (12) und den Ausgang (14) schaltbar sind.

7. Vorrichtung nach Anspruch 6, enthaltend:

eine erste Datenmodifizierungsschaltung (320) zum Aufteilen der einzelnen aufeinanderfolgenden digitalen Geschwindigkeitsfehlersignalanteile in einen ersten digitalen Signalanteil, der die höherwertigen Datenbits enthält, und einen zweiten digitalen Signalanteil, der die verbleibenden niedrigerwertigen Datenbits enthält, wobei die erste Datenmodifizierungsschaltung (320) Mittel zum Addieren des zweiten digitalen Signalanteils zu dem nächsten der aufeinanderfolgenden digitalen Geschwindigkeitsfehlersignalanteile aufweist,

sowie eine zweite Datenmodifizierungsschaltung (340) zum Aufteilen jedes der aufeinanderfolgenden digitalen Phasenfehlersignalanteile in einen dritten digitalen Signalanteil, der die höherwertigen Datenbits enthält, und einen vierten digitalen Signalanteil, der die verbleibenden niedrigerwertigen Datenbits enthält, wobei die zweite Datenmodifizierungsschaltung (340) Mittel zum Addieren des vierten digitalen Signalanteils zu dem nächsten der aufeinanderfolgenden digitalen Phasenfehlersignalanteile aufweist.

# FIG. 1

# FIG.2

(a)

FG

(b)

N1    N2    N3    N4    N5    N6

# FIG.6

(a)  VP

(b)    PG

(c)

M1                    M2

EP 0 249 465 B1

# FIG.3

(a) DS

(b) DS$_1$

(c) DS$_3$

(d) DS$_0$

# FIG.4

FIG.5

EP 0 249 465 B1

**FIG.7**

## FIG.8

K4 · DS

| MSB | | | | | | | LSB |
|---|---|---|---|---|---|---|---|

8 BITS

K5 · DP

| MSB | | | | | | | LSB |
|---|---|---|---|---|---|---|---|

4 BITS          8 BITS

+)

K4 · DS + K5 · DP

| MSB | | | | | | LSB | | | | |
|---|---|---|---|---|---|---|---|---|---|---|

8 BITS
( USED DATA )

4 BITS
( IGNORED DATA )

## FIG.9

# FIG.10

EP 0 249 465 B1

# FIG.11